(19) Europäisches Patentamt
European Patent Office
Office européen des brevets

(11) **EP 1 025 655 B1**

(12) **EUROPÄISCHE PATENTSCHRIFT**

(45) Veröffentlichungstag und Bekanntmachung des Hinweises auf die Patenterteilung:
**18.12.2002   Patentblatt 2002/51**

(21) Anmeldenummer: **98961020.9**

(22) Anmeldetag: **19.10.1998**

(51) Int Cl.$^7$: **H04B 7/005**

(86) Internationale Anmeldenummer:
**PCT/DE98/03049**

(87) Internationale Veröffentlichungsnummer:
**WO 99/022461 (00.00.0000 Gazette 1999/18)**

(54) **VERFAHREN UND EMPFANGSEINRICHTUNG ZUR DATENÜBERTRAGUNG IN EINEM KOMMUNIKATIONSSYSTEM**

METHOD AND RECEIVER FOR TRANSMITTING DATA IN A COMMUNICATION SYSTEM

PROCEDE ET RECEPTEUR PERMETTANT DE TRANSMETTRE DES DONNEES DANS UN SYSTEME DE COMMUNICATION

(84) Benannte Vertragsstaaten:
**DE FR GB IT**

(30) Priorität: **27.10.1997  DE 19747454**

(43) Veröffentlichungstag der Anmeldung:
**09.08.2000   Patentblatt 2000/32**

(73) Patentinhaber: **SIEMENS AKTIENGESELLSCHAFT
80333 München (DE)**

(72) Erfinder: **RITTER, Gerhard
D-86943 Thaining (DE)**

(56) Entgegenhaltungen:
**EP-A- 0 637 139          EP-A- 0 674 455
US-A- 4 644 562          US-A- 5 353 306
US-A- 5 414 732**

**Beschreibung**

Die Erfindung betrifft ein Verfahren und eine Empfangseinrichtung zur Datenübertragung in einem Kommunikationssystem, insbesondere einem Funk-Kommunikationssystem.

In Kommunikationssystem werden Daten von einer Datenquelle zu einer Datensenke über einen Übertragungskanals übertragen. In Funk-Kommunikationssystemen werden Nachrichten (beispielsweise Sprache, Bildinformation oder andere Daten) mit Hilfe von elektromagnetischen Wellen von einem Sender zu einem Empfänger über eine den Übertragungskanal bildende Funkschnittstelle übertragen. Bei analogen Übertragungsverfahren wird ein Parameter einer Trägerschwingung (Amplitude oder Frequenz) moduliert. Bei der Übertragung von Daten als digitale Symbole wird empfangsseitig nicht der gesamte Verlauf des Parameters der Trägerschwingung, sondern nur dessen digitaler Wert zu diskreten Zeitpunkten betrachtet.

Bisherige Übertragungsverfahren modulieren einen oder mehrere Parameter einer Trägerschwingung in einem Symboltakt. Dieser Symboltakt wird auch beim Empfänger zur Auswertung der übertragenen Daten benutzt.

Beispielsweise sind aus GSM-Mobilfunksysteme (global System for mobile communications) Detektionsalgorithmen bekannt, die eine Intersymbolverzerrung ausgleichen können. Ein solcher Detektionsalgorithmus ist der Viterbi-Algorithmus, bei dem Verzerrungen der übertragenen Daten und Veränderungen der Trägerschwingung ausgeglichen werden können. Aus DE 41 21 356 A1 ist weiterhin ein Delektionsverfahren mit gemeinsamer Detektion (joint detection) bekannt, das gleichzeitig mehrere Teilnehmersignale trennt, die sich anhand individueller Spreizcodes unterscheiden. Beide Algorithmen sind jedoch rechenintensiv.

Aus der EP-A-0 637 139 ist ein Verfahren und eine Empfangseinrichtung zur Beseitigung von Interferenzstörungen bekannt. Hierbei wird eine Schätzung eines Interferenzsignals nicht nur für die Detektion eines gewünschten Empfangssignals, sondern auch für ein Interferenzsignal einer weiteren Funkstation durchgeführt. Anschließend wird das gewünschte Empfangssignal und das geschätzte Interferenzsignal von dem empfangenen Signal substrahiert, um die Interferenzsignalkomponente aus einem geschätzten Fehlersignal zu beseitigen, wodurch die Empfangsleistung für ein empfangenes Signal, das ein Interferenzsignal einer weiteren Funkstation aufweist, verbessert wird.

Aus der EP-A-0 674 455 ist ein Verfahren und ein Empfänger bekannt, die eine Übertragung eines gleichen Signals von mehreren Basisstationen eines Mobilfunksystems ermöglichen. Dabei werden in Abwärtsrichtung von Basisstationen zweier benachbarter Funkzellen zu sendende Signale in einer Umsetzeinrichtung in jeweils zwei gegenseitig pseudo-orthogonale Übertragungssignalsequenzen gewandelt. Die Basisstationen wandeln die Sequenzen anschließend in Rahmen, fügen zusätzlich eine gegenseitig orthogonale Trainingssignale zu dem Rahmen hinzu und senden die Rahmen in einem gemeinsamen Kanal in der Abwärtsrichtung. In einer Mobilstation werden die empfangenen Signale in einer Signaltrennungseinrichtung unter Verwendung der basisstationsindividuellen Trainingssignale separiert. Invertierungsschaltungen erzeugen anschließend zwei Übertragungssignalsequenzen durch eine inverse Rückwärtskonvertierung der Signalsequenzen und geben jeweils eine Signalsequenz mit einer größeren Metrik aus, die zur Rekonstruktion des empfangenen Signals einer Rekonstruktionseinrichtung zugeführt wird.

Aus der US-A-5 353 306 ist weiterhin ein sogenanntes Adaptive Matched Filter bekannt, das einen mit einem mindestens doppelten Symboltakt arbeitenden Analog/Digital-Wandler sowie einen nachgeschalteten Transversalfilter zur Verarbeitung der digitalen Abtastwerte eines Symbols, das sendeseitig mit einem bekannten digitalen Modulationsverfahren moduliert wurde, aufweist.

Aufgabe der Erfindung ist es, ein Verfahren und eine Empfangseinrichtung zur Datenübertragung anzugeben, die mit geringem Rechenaufwand die Möglichkeiten zum Augleich diverser Störungen auf ein übertragenes Teilnehmersignal verbessern. Diese Aufgabe wird durch das Verfahren mit den Merkmalen des Patentanspruchs 1 und das Kommunikationssystem mit den Merkmalen des Patentanspruches 12 gelöst. Vorteilhafte Weiterentwicklungen sind den Unteransprüchen zu entnehmen.

Durch das erfindungsgemäße Verfahren werden Daten mittels Grundimpulsen übertragen, die mit einem Grundimpulsfolgetakt getaktet sind und die durch den Übertragungskanal sowie den Empfänger modifiziert werden, jedoch am Ausgang des Empfängers jeweils eine charakteristische Systemgrundimpulsantwort liefern. Einzelne Systemgrundimpulsantworten überlagern sich bei diesem Verfahren linear. Durch die Verarbeitung dieser überlagerten Systemgrundimpulsantworten in einem diskontinuierlichen Transversalfilter läßt sich die Eliminierung der Intersymbolinterferenz, die Eliminierung von Gleichkanalstörungen, eine Rauschoptimierung und eine Detektion von mehreren überlagerten Teilnehmersignalen vornehmen.

Das diskontinuierliche Transversalfilter ermöglicht eine aufwandgünstige Realisierung einer Empfangseinrichtung. Abhängig von der Dimensionierung und dem Aufwand, der bei der Transversalfilterung betrieben wird, werden durch das Verfahren bisher nur näherungsweise berücksichtigte Übertragungsverzerrungen wesentlich besser ausgeglichen.

Zur empfangsseitigen Verarbeitung wird ein über einen Übertragungskanal übertragenes Teilnehmersignal empfangen, das aus mit einem Modulationsfaktor modifizierten Grundimpulsen besteht, wobei die Grundimpulse mit einem Grundimpulsfolgetakt getaktet werden. Aus dem Teilnehmersignal werden Abtastwerte mit einer Abtastrate bestimmt, worauf eine Transversalfilterung der Abtastwerte in einem diskontinuierlichen Transversalfilter erfolgt. Die Taktung des diskontinuierlichen Transversalfilters ist auf den Grundimpulsfolgetakt bezogen ist. Weiterhin werden aus dem Teilnehmersignal teilnehmersignalindividuelle Systemgrundimpulsantworten bestimmt, aus denen teilnehmersignalindividuelle Filterkoeffizienten für das Transversalfilter berechnet werden.

Das diskontinuierliche Verhalten des Transversalfilters beruht darauf, daß eine Abtastung mit einem höheren Takt als dem Grundimpulsfolgetakt vorliegen muß. Die Taktung des Transversalfilters erfolgt derart, daß die Abtastwerte um einen Grundimpulsfolgetakt, d.h. um mehr als einen Abtastwert, versetzt werden. Einzelne Filteroperationen werden vorgenommen und das Ergebnis bestimmt. Daraufhin erfolgt eine Weitertaktung im Schieberegister entsprechend der Überabtastung der Systemgrundimpulsantworten, so daß sich ein versetzen der Abtastwerte im Schieberegister um einen Grundimpulsfolgetakt ergibt. Danach erfolgt wiederum eine Filteroperation. Das Ergebnis ist eine Folge der im allgemeinen komplexen Modulationsfaktoren, mit denen die Grundimpulse sendeseitig beaufschlagt wurden.

Vorteilhafterweise entspricht die Abtastrate einem ganzen Vielfachen des Grundimpulsfolgetaktes. Damit ist ein die Zusammenhänge zwischen Filterergebnis, Abtastwerten und Filterkoeffizienten angebendes Gleichungssystem bei verschiedenen Einsatzmöglichkeiten des Transversalfilters eindeutig lösbar. Wird mit Matrixoperationen gearbeitet, so ist eine Abtastung mit doppeltem oder einem ganzzahligen Vielfachen des doppelten Grundimpulsfolgetakt vorteilhaft, da damit quadratische und somit leicht invertierbar Matrizen gegeben sind. Die Größe einer solchen Matrix hängt auch von der Anzahl zu unterscheidender Teilnehmersignale ab, so daß ggf. die Abtastrate entsprechend gewählt wird.

Das erfindungsgemäße Verfahren eröffnet umfangreiche Möglichkeiten zur Gestaltung der Grundimpulse, der Verwendung von einem oder mehreren Grundimpulsen für ein oder mehrere Teilnehmersignale, so daß durch die Auswahl und/oder Abfolge der Grundimpulse Daten dargestellt werden können oder verschiedene Teilnehmersignale unterscheidbar sind. Es ist dabei hervorzuheben, daß der gleiche Grundimpuls für zwei ausreichend unterschiedliche Übertragungskanäle verwendet werden kann, so daß sich anhand der unterschiedlichen Systemgrundimpulsantworten zwei sich überlagernde Teilnehmersignale trennen lassen.

Nach einer vorteilhaften Weiterbildung der Erfindung werden in den Teilnehmersignalen enthaltene Meßsequenzen zur Bestimmung der Systemgrundimpulse und daraus der Filterkoeffizienten ausgewertet, wobei Charakteristika der Meßsequenzen empfangsseitig gespeichert sind. Durch die Meßsequenzen sinkt zwar die Übertragungskapazität, doch wird eine zuverlässige Bestimmung der Filterkoeffizienten erleichtert. Zur Auswertung mehrerer Teilnehmersignale werden mehrere teilnehmersignalindividuelle Filterkoeffizienten bestimmt und eine entsprechende Anzahl von Transversalfilteroperationen durchgeführt. Da beispielsweise in Funk-Kommunikationssystem eine Zeitabhängigkeit der Systemgrundimpulsantworten zu erwarten ist, wird vorteilhafterweise die Bestimmung der Systemgrundimpulsantworten in einem Abstand aktualisiert, der größer ist als die Periode der Taktrate des diskontinuierlichen Transversalfilters.

Zur Vereinfachung der sendeseitigen Signalverarbeitung trägt bei, daß die Dauer eines Grundimpulses größer ist als eine Periode des Grundimpulsfolgetaktes. Bei einer linearen Überlagerung der Grundimpulse treten bei der empfangsseitigen Auswerten keinerlei zusätzlichen Schwierigkeiten auf.

Die Transversalfilterung kann mehrstufig erfolgen. Zur Rauschoptimierung wird eine Korrelation der Abtastwerte mit einer konjugiert komplexen Größe der Systemgrundimpulsantwort durchgeführt. In weiteren Transversalfilterstufen können einzeln die Gleichkanalstörungen und Einflüsse anderer Teilnehmersignale ausgeglichen werden.

Ausführungsbeispiele der Erfindung werden anhand der beiliegenden Zeichnungen näher erläutert.

Dabei zeigen

FIG 1     ein Blockschaltbild eines Mobilfunknetzes,

FIG 2     eine schematische Darstellung der Datenübertragung,

FIG 3     ein Blockschaltbild des Senders,

FIG 4     ein Blockschaltbild des Empfängers,

FIG 5     ein Blockschaltbild des Transversalfilters, und

FIG 6-9   schematische Darstellungen von Transversalfilterstufen.

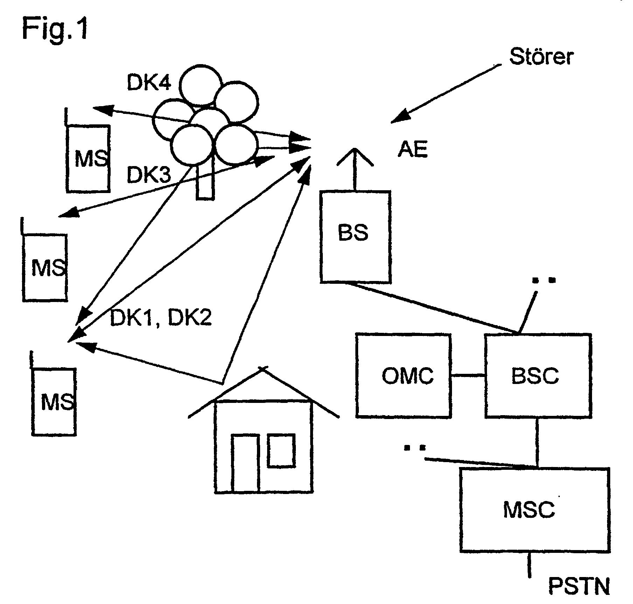

Das in FIG 1 dargestellte Funk-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Funkverbindung zu Mobilstationen MS aufbauen kann.

In FIG 1 sind beispielhaft drei Funkverbindungen zur Übertragung von Nutzinformationen und Signalisierungsinformationen zwischen drei Mobilstationen MS und einer Basisstation BS dargestellt, wobei einer Mobilstation MS zwei Datenkanäle DK1 und DK2 und den anderen Mobilstationen MS jeweils ein Datenkanal DK3 bzw. DK4 zugeteilt sind. Jeder Datenkanal DK1..DK4 repräsentiert ein Teilnehmersignal.

Ein Operations- und Wartungszentrum OMC realisiert Kontroll- und Wartungsfunktionen für das Mobilfunknetz bzw. für Teile davon. Die Funktionalität dieser Struktur wird vom Funk-Kommunmikationssystem nach der Erfindung genutzt; sie ist jedoch auch auf andere Funk-Kommunikationssysteme übertragbar, in denen die Erfindung zum Einsatz kommen kann.

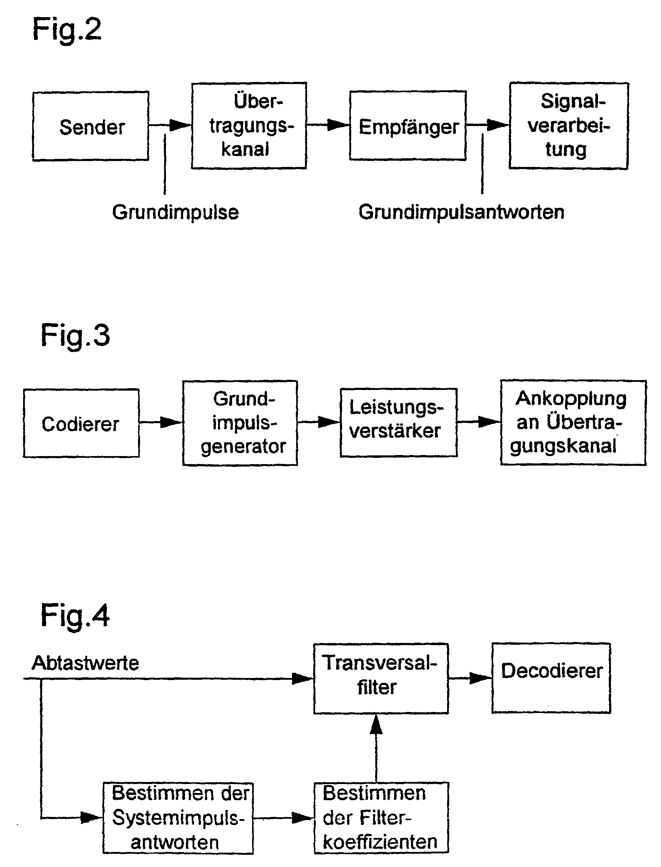

Wird nur die Funkschnittstelle zwischen Mobilstation MS und Basisstation BS betrachtet, dann kann dieses Übertragungssystem mit FIG 2 dargestellt werden. Ein Sender überträgt modulierte Grundimpulse über einen Üertragungskanal zu einem Empfänger, der Systemgrundimpulsantworten bestimmt und weiterhin in einer Signalverarbeitung die in der Modulation enthaltenen Daten detektiert. Sender und Empfänger können jeweils in der Mobilstation MS und der Basisstation BS realisiert werden.

Der Sender besteht aus einem Codierer, einem Grundimpulsgenerator, einem Leistungsverstärker und einer Ankoppelung an das Übertragungsmedium. Der Sender erzeugt in dem Grundimpulsfolgetaktgenerator Grundimpulse, die über den Leistungsverstärker an die Ankoppelung (Antenne oder Schallgeber) weitergegeben werden. Im Codierer wird abhängig von den zu übertragenden Daten ausgewählt, welcher Grundimpuls, aus einem Vorrat von insgesamt verfügbaren Grundimpulsen ausgesandt wird und mit welchem, im allgemeinen komplexen Modulationsfaktor dieser Grundimpuls modifiziert wird.

Unterschiedliche Übertragungsverfahren unterscheiden sich im Vorrat an Grundimpulsen. Es können dabei ein, mehrere oder eine größere Anzahl von Grundimpulsen verwendet werden. Diese Grundimpulse können in ihrer zeitlichen Ausdehnung beliebig sein und sind nicht auf die Zeitdauer des Grundimpulsfolgetaktes festgelegt. Bei Grundimpulsen, die länger als eine Periode des Grundimpulsfolgetaktes sind, ergibt sich eine Überlagerung der Grundimpulse bereits im Sender.

Im Empfänger erfolgt die folgende Signalverarbeitung in einer Einrichtung zur Signalvorverarbeitung: Verstärkung, Frequenzumsetzung, analoge Filterung, A/D-Umsetzung und digitale Filterung. Insbesondere die Gesamtfiltercharakteristik des Empfängers verändert die bereits durch den Übertragungskanal modifizierten Grundimpulse weiter. Am Ausgang der digitalen Filterung ergibt sich eine Folge von Systemgrundimpulsantworten im Takt des Grundimpulsfolgetaktes. Diese Folge überlagerter Systemgrundimpulsantworten wird der Signalverarbeitung und Detektion zugeführt.

Die empfangsseitige Signalverarbeitung ist schematisch in FIG 4 gezeigt. Sie umfaßt die Bestimmung der Systemgrundimpulsantworten, die Bestimmung der Filterkoeffizienten für zumindest ein Transversalfilter während der Auswertung von Meßsequenzen, die Detektion von datentragenden Teilen der Abtastwerte in einem ein- oder mehrstufigen Transversalfilter und die Decodierung der Ergebnisse des Ausgangs des Transversalfilters.

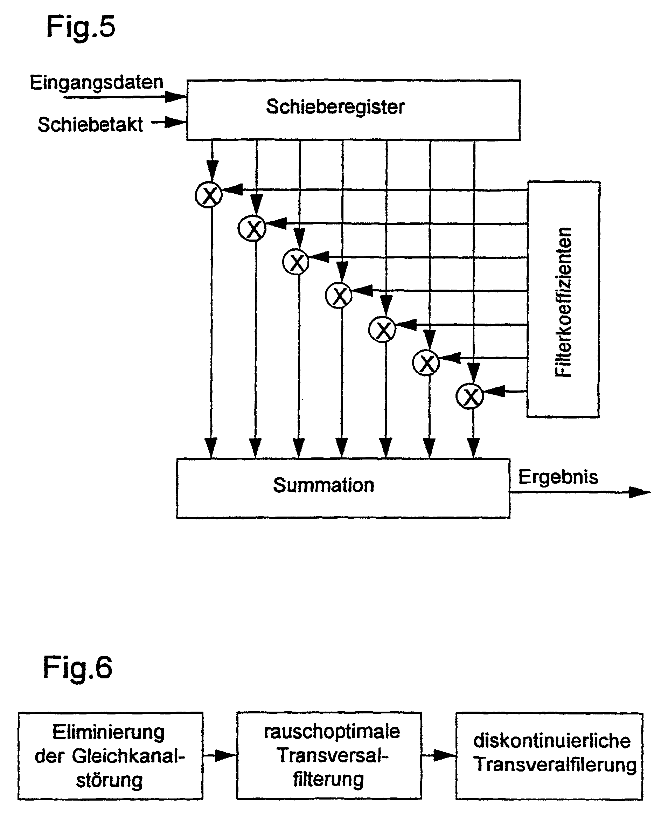

Ein diskontinuierliches Transversalfilter DTF nach FIG 5 nimmt die Verarbeitung der Abtastwerte der datemtragenden Teile vor. Das Transversalfilter DTF wird diskontinuierlich betrieben, da eine Abtastung der Systemgrundimpulsantworten mit einem höheren Takt als der Grundimpulsfolgetakt erfolgt. Nach einer Filteroperation erfolgt eine Weitertaktung des Schieberegisters um eine Anzahl von Abtastwerten entsprechend der Überabtastung der Systemgrundimpulsantworten, so daß sich ein versetzen der Abtastwerte um einen Grundimpulsfolgetakt ergibt. Die einzelnen im Schieberegister gespeicherten Abtastwerte werden mit den bestimmten Filterkoeffizienten bewertet und summiert. Das Ergebnis der Summation ist eine Folge der komplexen Modulationsfaktoren mit denen die Grundimpulse auf der Sendeseite beaufschlagt wurden.

Das Schieberegister speichert eine bestimmte Anzahl von Abtastwerten der überlagerten Systemgrundimpulsantworten, wie sie am Ausgang des Empfängers anfallen. Anhand der Eliminierung der Intersymboldifferenz wird im folgenden erklärt, wie vorteilhafterweise die Zahl der Abtastwerte, der Abtasttakt und die Filterkoeffizienten bestimmt werden.

Die, im allgemeinen, komplexen Abtastwerte Si im Schieberegister sind abhängig von der Systemgrundimpulsantwort SA0..SAm und den komplexen Modulationsfaktoren Mi der beteiligten Grundimpulse. Dieser Zusammenhang läßt sich folgendermaßen darstellen:

$$\begin{pmatrix} S0 \\ S1 \\ S2 \\ \\ \\ \\ \\ \\ Sn \end{pmatrix} = \begin{pmatrix} SAm & & & & SA2 & SA0 & 0 & 0 & 0 & 0 \\ 0 & SAm-1 & . & . & SA1 & 0 & 0 & 0 & 0 \\ 0 & SAm & SAm-1 & . & SA2 & SA0 & 0 & 0 & 0 \\ 0 & 0 & SAm & . & . & SA1 & 0 & 0 & 0 \\ 0 & 0 & 0 & . & . & SA2 & SA0 & 0 & 0 \\ 0 & 0 & 0 & SAm-1 & . & . & SA1 & 0 & 0 \\ 0 & 0 & 0 & SAm & . & . & SA2 & SA0 & 0 \\ 0 & 0 & 0 & 0 & . & . & . & SA1 & 0 \\ 0 & 0 & 0 & 0 & SAm & . & . & SA2 & SA0 \end{pmatrix} \cdot \begin{pmatrix} M0 \\ M1 \\ M2 \\ . \\ . \\ . \\ . \\ . \\ Mm \end{pmatrix}$$

Damit dieses Gleichungssystem eindeutig lösbar ist, wird eine quadratische Matrix geschaffen. Dies erfordert eine Abtastung mit einer Abtastrate größer oder gleich dem doppelten Grundimpulsfolgetakt. Die einzelnen Modulationsfaktoren Mi als Funktion der Abtastwerte Si erhält man durch die Lösung des Gleichungssystems bzw. Inversion der SA-Matrix.

Prinzipiell kann man insgesamt n komplexe Modulationsfaktoren Mi aus den vorliegenden n Abtastwerten Si bestimmen. Geschickter ist es jedoch im Sinne der Erfindung, aus dem mittleren Bereich nur einen komplexen Modulationsfaktor Mi auszuwählen, indem die mittlere Reihe der $(SA^{-1})$-Matrix mit den Abtastwerten Si multipliziert und anschließend die Teilergebnisse aufsummiert werden. Diese Verarbeitung entspricht damit einer Transversalfilteroperationm, wobei sich die Filterkoeffizientetn aus den Werten der mittleren Reihe der $(SA^{-1})$-Matrix ergeben. Anschließend werden die Abtastwerte um einen Grundimpulsfolgetakt versetzt und die Transversalfilteroperation wiederholt, um den nächsten Modulationsfaktor Mi zu bestimmen. Hierzu sind abhängig von der Abtastrate zwei oder mehr Schiebetakte erforderlich, daher die Bezeichnung diskontinuierliche Transversalfilterung.

Nimmt man in dem obigen Beispiel an, daß die Abtastrate dem dopppelten Grundimpulsfolgetakt entspricht und die Systemgrundimpulsantwort über 9 Abtastwerte erstreckt, dann wird ein Transversalfilter der Länge 9 mit 9 Filterkoeffizienten aus der 5. Reihe der $(SA^{-1})$-Matrix realisiert.

Dieses Verfahren stellt eine erhebliche Aufwandsreduktion im Vergleich mit einer "maximum-likelihood"-Detektion dar. Der Aufwand steigt nur linear mit dem Verhältnis von Länge der Systemgrundimpulsantwort zum Grundimpulsfolgetakt an. Damit sind relativ lange Intersymbolinterferenzen bzw. Übertragungsverzerrungen beherrschbar, wie sich bei hochratigen Übertragungsverfahren in ungünstigen Mobilfunkumgebungen (z.B. Anwendungserweiterungen des DECT-Systems) entstehen.

Das Ergebnis am Ausgang des diskontinuierlich arbeitenden Transversalfilters ist die Folge der Modulationsfaktoren Mi mit denen aufeinanderfolgende Grundimpulse im Sender beaufschlagt wurden. Dies sind nun komplexe Werte, die von der Intersymbolinterferenz befreit sind. Entsprechend der Codierung auf der Sendeseite ist nun noch eine Decodierung dieser Werte auf der Empfangsseite vorzunehmen. Dies kann beispielsweise bei einer binären Übertragung mit den Modulationsfaktoren +1 und -1 eine einfache Vorzeichenabfrage des Realteils des Ergebnisses sein. Es können auch BPSK, 0QPSK, GMSK oder höherstufige Modulationsfaktoren (n-PSK, QAM) gewählt werden, deren Bedeutung auch an eine Auswahl der Grundimpulse gekoppelt sein kann.

Voraussetzung für die Detektion ist die Kenntnis der $(SA^{-1})$-Matrix, von welcher nach der Matrixinversion bzw. dem Lösen des Gleichungssystems eine Reihe der invertierten Matrix als Filterkoeffizienten im Transversalfilter verwendet wird. Diese Matrix ist von der Systemgrundimpulsantwort und der Abtastrate abhängig. Das Verhältnis von Abtastrate zum Grundimpulsfolgetakt ist wählbar und damit bekannt, so daß nur die Systemgrundimpulsantwort bestimmt werden muß. Diese Systemgrundimpulsantwort ist zeitlich veränderlich, so wird in entsprechend kurzen Abstanden eine Bestimmung bzw. Messung der Systemgrundimpulsantwort vorgenommen, um die Filterkoeffizienten zu aktualisieren. Hierzu können in die Datenübertragung regelmäßig Meßsequenzen eingefügt werden.

Die Abtastung zur Bestimmung der Abtastwerte Si wird mit einem Abtasttakt durchgeführt, der einem ganzzahligen Vielfachen des Grundimpulsfolgetaktes entspricht. Damit wird eine Überbestimmtheit des Gleichungssystem erreicht, die zu den gewünschten Lösungen führt. Bei einer Doppelabtastung entsteht eine quadratische Matrix, die leicht zu invertieren ist. Die Matrixdimension für unterschiedliche Längen der Systemgrundimpulsantworten kann folgender Tabelle entnommen werden:

| Länge der Systemgrundimpulsantwort | Matrix-Dimension |
|---|---|
| 2 | 3 |

(fortgesetzt)

| Länge der Systemgrundimpulsantwort | Matrix-Dimension |
|---|---|
| 3 | 5 |
| 4 | 7 |
| 5 | 9 |
| 6 | 11 |
| 7 | 13 |
| 8 | 15 |
| 9 | 17 |
| 10 | 19 |

Zur Bestimmung der Filterkoeffizienten hat die Matrix eine in der Tabelle angegebene Dimension.

Wird die Abtastrate weiter erhöht, können weitere Bedingungen, z.B. eine rauschoptimierte Filterung oder eine Eliminierung von Gleichkanalstörungen durchgeführt werden.

Für eine rauschoptimierte Filterung wird das Verhältnis der Amplitude der Werte am Ausgang des Transversalfilters zu der mittleren Rauschamplitude ebenfalls am Ausgang maximiert. Ein Ansatz besteht darin, die Abtastwerte der Systemgrundimpulsantwort für welche der Modulationsfaktor bestimmt werden soll, jeweils mit einem hierzu konjugiert komplexen Wichtungsfaktor des Transversalfilters zu beaufschlagen. Es ist dabei näherungsweise ausreichend, nur die größten komplexen Wichtungsfaktoren zu bewerten. Damit erhält man eine Eliminierung der Intersymbolinterferenz mit rauschoptimierten Verhalten. Zusätzliche Freiheitsgrade können für eine Eliminierung der Gleichkanalstörungen verwendet werden.

In bestimmten Anwendungsfällen (nicht durch Zeit oder Frequenz separierbare Übertragungsverfahren) überlagern sich im Empfänger die Grundimpulsfolgen von mehreren Sendern. Verwendet jeder Sender nur einen Grundimpuls und sind die Folgen der Modulationsfaktoren der Sender voneinander unabhängig, dann ergibt sich für die Gleichkanalstörungen folgende Situation.

Um zwei Teilnehmersignale berücksichtigen zu können, wird pro Teilnehmersignal eine Matrix gewählt, die doppelt soviele Zeilen als Spalten hat. Die Zusammenfassung der Matrizen ergibt wieder eine quadratische Matrix. Es existieren bereits Lösungen bei einer Doppelabtastung, es ist jedoch vorteilhaft eine mindestens dreifache Überabtastung zu wählen, da dies zu kleineren Dimensionen der Gesamtmatrix führt. Die Mindestabtastrate entspricht somit einem Vielfachen des Grundimpulsfolgetaktes entsprechend der Zahl zu trennender Teilnehmersignale bzw. Gleichkanalstörern.

Für die Berücksichtigung weiterer Bedingungen ist die Abtastrate nochmals etwas höher zu wählen. Weiter ist es erforderlich, daß sich die Systemgrundimpulsantworten ausreichend unterscheiden. Hierzu ist bei exakt gleichen Grundimpulsen der Teilnehmer bereits eine andere Phasenlage in Bezug zum Grundimpulsfolgetakt auf der Empfängerseite ausreichend. Hinzu kommt, daß die unterschiedlichen Ausbreitungswege selbst zu unterschiedlichen Verzerrungen der Systemgrundimpulsantworten führen.

Die Überlagerung der Teilnehmersignale kann unbeabsichtigt (Gleichkanalstörung) oder beabsichtigt sein. Letzteres entspricht dem Fall einer Mehrteilnehmerdetektion im Empfänger (z.B. einer Basisstation oder einer Mobilstation mit mehreren Datenkanälen). Auch bei der Mehrteilnehmerdetektion wird bei der Dimensionierung der Matrix ein Struktur mit mehr Zeilen als Spalten angestrebt. Hierbei ist zur Detektion jedes Teilnehmersignals jeweils eine Transversalfilteroperation erforderlich, wobei die Filterkoeffizienten die jeweils entsprechende Zeile der invertierten Matrix entnommen werden.

Bisher wurde nur eine Übertragung mit-einem Grundimpuls betrachtet. Wird der nutzbare Vorrat an Grundimpulsen (z.B. Gauß'scher Grundimpuls, zeitlich begrenzter sin(x)/x-Grundimpuls, Grundimpuls der MSK-Modulation; wobei bei Mehrteilnehmerdetektionen die Grundimpulse von einem gemeinsamen Subgrundimpuls abgeleitet werden) erhöht, so kann dies zur Erhöhung der Datenrate oder zur Erzielung bestimmter Eigenschaften des Sendesignals benutzt werden. Zur Erhöhung der Datenrate kann ein Informationsbit durch die Auwahl des verwendeten Grundimpulses übertragen werden (Auswahlkodierung) oder es werden mehrere parallel Informationsströme geschaffen, die individuelle Grundimpulse nutzen.

Auf die Bestimmung der Systemgrundimpulsantworten wird im folgenden nicht eingegangen. Die Systemgrundimpulsantworten können beispielsweise durch Auswertung von gesendeten Meßsequenzen bestimmt werden. Im Sinne einer Kanalschätzung wird die gemessene Übertragungscharakteristik mit a-priori bekannten Systemgrundimpulsen verglichen, so daß die Systemgrundimpulsantwort, die zu Bestimmung der Filterkoeffizienten benutzt wird, ermittelt werden kann.

Für die grundsätzlichen Anforderungen an Mobilfunksysteme, bei hohem Verkehrsaufkommen eine hohe spektrale Effizienz zu garantieren und bei geringem Verkehrsaufkommen eine hohe Reichweite zu erzielen, und für die individuellen Übertragungsbedingungen, bedingt durch Gleichkanalstörung, Mehrteilnehmerdetektion und Empfängerrauschen, können individuelle Lösungen nach folgenden Überlegungen abgeleitet werden.

Wird empfängerseitig nur ein Teilnehmersignal ausgewertet und soll das Transversalfilter für eine Gleichkanalstörung optimiert werden, dann wird ein Transversalfilter derart dimensioniert, daß jeder zweite Filterausgangswert mit Ausnahme eines einzigen Zeitpunktes gleich Null ist. Der eine Ausgangswert dient später zur Normierung auf "1" und als Bezugspunkt für eine Datenentscheidung. Die übrigen Werte (ungleich Null und ungleich dem Bezugspunkt) interessieren nicht weiter, so daß eine Folge von Nullwerten mit einem "1"-Wert entsteht. Das Transversalfilter kann somit diskontinuierlich betrieben werden.

Zur Bestimmung der Filterkoeffizienten des Transversalfilters wird für einen Beispielsfall angenommen, daß eine Intersymbolinterferenz über 4 Symbole vorliegt. Dies ergibt bei der angenommenen Doppelabtastung 8 Abtastwerte der Systemgrundimpulsantwort, im weiteren mit SG bezeichnet. Die Filterkoeffizienten werden mit TI; I für Intersymbolinterferenz bezeichnet. So ergibt sich folgende Bestimmungsmatrix:

$$\begin{pmatrix}0\\0\\0\\1\\0\\0\\0\end{pmatrix}=\begin{pmatrix}SG6 & SG7 & 0 & 0 & 0 & 0 & 0\\SG4 & SG5 & SG6 & SG7 & 0 & 0 & 0\\SG2 & SG3 & SG4 & SG5 & SG6 & SG7 & 0\\SG0 & SG1 & SG2 & SG3 & SG4 & SG5 & SG6\\0 & 0 & SG0 & SG1 & SG2 & SG3 & SG4\\0 & 0 & 0 & 0 & SG0 & SG1 & SG2\\0 & 0 & 0 & 0 & 0 & 0 & SG0\end{pmatrix}\cdot\begin{pmatrix}TI0\\TI1\\TI2\\TI3\\TI4\\TI5\\TI6\end{pmatrix}$$

Bei dieser Struktur der Bestimmungsmatrix ist der Koeffizient TI6 gleich 0, daß Transversalfilter hat also eine Länge von 6, für von Null verschiedenen Koeffizienten. Dies kann durch Streichen der letzten Zeile und Spalte berücksichtigt werden.

$$\begin{pmatrix}0\\0\\0\\1\\0\\0\end{pmatrix}=\begin{pmatrix}SG6 & SG7 & 0 & 0 & 0 & 0\\SG4 & SG5 & SG6 & SG7 & 0 & 0\\SG2 & SG3 & SG4 & SG5 & SG6 & SG7\\SG0 & SG1 & SG2 & SG3 & SG4 & SG5\\0 & 0 & SG0 & SG1 & SG2 & SG3\\0 & 0 & 0 & 0 & SG0 & SG1\end{pmatrix}\cdot\begin{pmatrix}TI0\\TI1\\TI2\\TI3\\TI4\\TI5\end{pmatrix}$$

Die Position 1 im Vektor der Filterausgangswerte kann beliebig gewählt werden. Die Inversion der Bestimmungsmatrix und die Multiplikation mit dem gewünschten Filterausgangsvektor liefert die gesuchten Koeffizienten des Transversalfilters. Dies bedeutet, daß eine beliebe Spalte der invertierten Matrix für die Koeffizienten gewählt werden kann. Damit ist eine zusätzliche Auswahlmöglichkeit für eine optimiertes Rauschverhalten gegeben. Hierzu wird die Quadratsumme aller Spalten der invertierten Matrix gebildet und die Spalte mit der geringsten Quadratsumme verwendet.

$$\begin{pmatrix}TI0\\TI1\\TI2\\TI3\\TI4\\TI5\end{pmatrix}=\begin{pmatrix}SG6 & SG7 & 0 & 0 & 0 & 0\\SG4 & SG5 & SG6 & SG7 & 0 & 0\\SG2 & SG3 & SG4 & SG5 & SG6 & SG7\\SG0 & SG1 & SG2 & SG3 & SG4 & SG5\\0 & 0 & SG0 & SG1 & SG2 & SG3\\0 & 0 & 0 & 0 & SG0 & SG1\end{pmatrix}^{-1}\cdot\begin{pmatrix}0\\0\\0\\1\\0\\0\end{pmatrix}$$

Das gesuchte Transversalfilter hat zur Befreiung der Intersymbolinterferenz eine Anzahl von Koeffizienten, die um zwei geringer ist als die Anzahl der tatsächlichen Abtastwerte der Systemgrundimpulsantwort. Die Struktur der Bestimmungsmatrix beginnt in der ersten Zeile mit den letzten von Null verschiedenen Abtastwerten der Systemgrundimpulsantwort. Alle nachfolgenden Zeilen der Bestimmungsmatrix ergeben sich durch eine Verschiebung der Abtastwerte um zwei nach rechts, bis in der letzten Zeile die beiden erten Abtastwerte am Ende der Zeile stehen.

Alternativ zu einer numerischen Inversion der Matrix kann auch eine symbolische Inversion und eine symbolische Multiplikation mit dem gewünschten Filterausgangsvektor verwendet werden.

Aufgrund des deterministischen Ansatzes ergeben sich keine Probleme mit einer Fehlerfortpflanzung bei der Detektion, wie dies bei rückgekoppelten Verfahren der Fall ist.

Für eine Rauschoptimierung, d.h. für Fälle mit erhöhtem Rauschanteil des Empfangssignals, wird eine Korrelation mit der konjugiert komplexen der Systemgrundimpulsantwort durchgeführt. Die Anteile der Systemgrundimpulsantwort werden phasenrichtig zusammengefaßt während sich die Rauschanteile leistungsmäßig addieren. Es wird zur Erzielung eines möglichst rauscharmen Verhaltens zunächst ein rauschoptimierender Verarbeitungsschritt durchgeführt und dann eine Detektion durchgeführt, siehe FIG 6 bis 9.

Die Korrelation kann mit einer Transversalfilterstufe erfolgen, wobei die Filterkoeffizienten gleich den konjugiert komplexen Abtastwerten der Systemgrundimpulsantwort sind. Dieser Verarbeitungsschritt resultiert in einer Verbreiterung der resultierenden Systemgrundimpulsantwort (doppelte ursprüngliche Länge minus 1), doch erfolgt gleichzeitig eine gewisse Reduktion der Intersymbolinterferenz mit einem deutlich ausgeprägtem Maximum, wenn eine Systemgrundimpulsantwort momentan deckungsgleich im Transversalfilter verarbeitet wird. Dabei stellt dieses Maximum eine rauschoptimale Zusammenfassung aller Komponenten der Systemgrundimpulsantwort dar.

Gemäß FIG 6 kann vor der rauschoptimalen Filterung eine Eliminierung der Gleichkanalstörung erfolgen. Kann der oder die leistungsstärksten Gleichkanalstören eliminiert werden, ergeben sich erhebliche Gewinne in einem Mobilfunksystem.

Auch die Eliminierung von Gleichkanalstörern kann in einem Transversalfilter erfolgen. In jedem Transversalfilter wird die Datenrate am Ausgang gegenüber der Datenrate am Eingang mindestens um einen Faktor zwei reduziert. Bei mehreren Filterstufen ist also die Abtastrate entsprechend zu erhöhen. Ähnlich wie bei der Eliminierung der Intersymbolinterferenz wird ein Transversalfilter gesucht, das an seinem Ausgang für jeden zweiten Abtastwert den Wert Null ergibt, jedoch soll diesmal kein Wert gleich "1" sein.

Für ein Beispiel mit einem Gleichkanalstörer, der eine Ausdehnung der Intersymbolinterferenz von 4 Symbolen hat, liegen bei einer Vierfachabtastung 16 Abtastwerte der Systemgrundimpulsantwort I des Gleichkanalstörers vor.

$$
\begin{pmatrix}
0\\0\\0\\0\\0\\0\\0\\0\\0\\0\\0\\0\\0\\0
\end{pmatrix}
=
\begin{pmatrix}
I_{14} & I_{15} & 0 & 0 & 0 & 0 & . & \cdots & 0 & 0\\
I_{12} & I_{13} & I_{14} & I_{13} & 0 & 0 & . & \cdots & 0 & 0\\
I_{10} & I_{11} & I_{12} & I_{11} & I_{14} & I_{13} & . & \cdots & 0 & 0\\
I_8 & I_9 & . & I_9 & . & . & . & \cdots & 0 & 0\\
I_6 & I_7 & . & . & . & . & . & \cdots & 0 & 0\\
I_4 & I_5 & . & . & . & . & . & \cdots & 0 & 0\\
I_2 & I_3 & . & . & . & . & . & \cdots & I_{14} & I_{15}\\
I_0 & I_1 & . & . & . & . & . & \cdots & I_{12} & I_{13}\\
0 & 0 & I_0 & I_1 & . & . & . & \cdots & I_{10} & I_{11}\\
0 & 0 & 0 & 0 & I_0 & I_1 & . & \cdots & I_8 & I_9\\
0 & 0 & 0 & 0 & 0 & 0 & . & \cdots & I_6 & I_7\\
0 & 0 & 0 & 0 & 0 & 0 & . & \cdots & I_4 & I_5\\
0 & 0 & 0 & 0 & 0 & 0 & . & \cdots & I_2 & I_3\\
0 & 0 & 0 & 0 & 0 & 0 & . & \cdots & I_0 & I_1
\end{pmatrix}
\cdot
\begin{pmatrix}
TG_0\\TG_1\\.\\.\\.\\.\\.\\.\\.\\.\\.\\.\\.\\TG_{13}
\end{pmatrix}
$$

Eine Lösung dieser Bestimmungsgleichung über eine Matrixinversion ist in diesem Fall nicht möglich. Dafür wird ein Eliminationsverfahren benutzt, das die Koeffizienten TGi für das Transversalfilter berechnet. Bei einer Filterung wird nur jeder zweite Ausgangswert bestimmt. Verwendet werden die werte, für die sich gemäß obiger Bestimmungsgleichung Nullstellen für die modifizierte Systemgrundimpulsantworten des Gleichkanalstörers ergeben. Am Ausgang des ersten Filterschrittes erhält man ein von der Gleichkanalstörungs befreites Empfangssignal und eine modifizierte Systemgrundimpulsantwort.

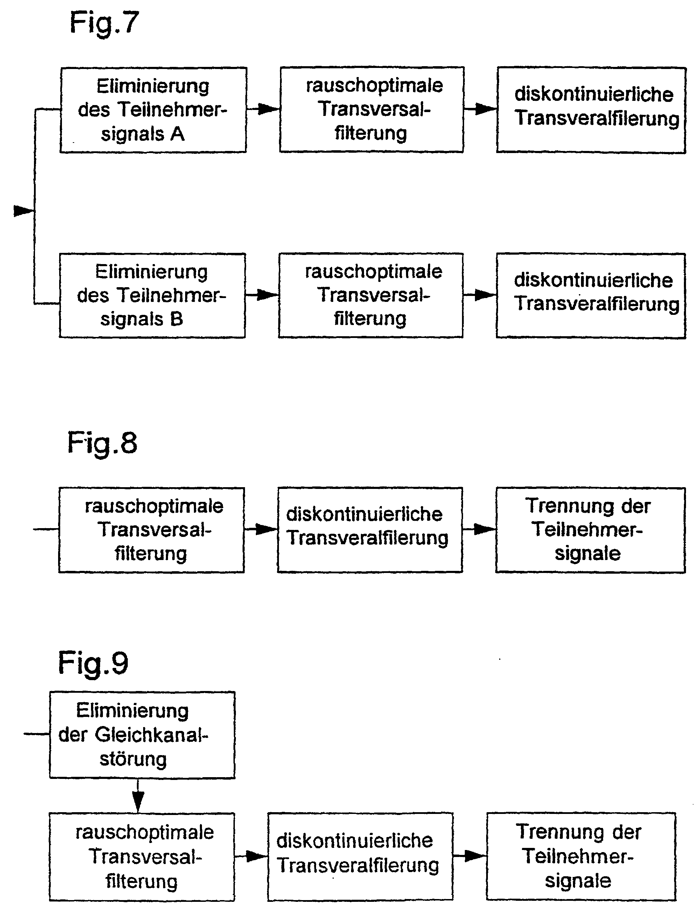

Bisher wurden Beispiele für die Detektion eines Teilnehmersignals gezeigt. Gemäß FIG 7 ist jedoch durch Transversalfilterung auch eine Mehrteilnehmerdetektion (multi user detection) ausführbar. Die Verarbeitung erfolgt in zwei Zweigen (oberer Zweig für Teilnehmersignal B und unter für Teilnehmersignal A). In einem ersten Schritt wird jeder Zweig von Einfluß des jeweils anderen Teilnehmersignals im Sinne einer Gleichkanalstörung befreit. Es folgt eine rauschoptimierte Filterung und eine Detektion mit einem diskontinuierlichen Transversalfilter. Dieses Prinzip läßt sich auf mehr als zwei Teilnehmer erweitern. Dieses Verfahren erfordert für zwei Teilnehmer eine Vierfachabtastung, für drei Teilnehmer eine Achtfachabtastung u.s.w. Dabei unterscheiden sich die Systemgrundimpulsantworten der Teilnehmersignale ausreichend. Dies erfolgt üblicherweise durch eine Codierung der Grundimpulse auf der Sendeseite.

Bei der Mehrteilnehmerdetektion können zwei Fälle unterschieden werden, einer Punkt-zu-Multipunkt-Verbindung (beispielsweise einer Basisstation in Abwärtsrichtung), bei der die Teilnehmersignale von einem Sender abgestrahlt werden, und einer Multipunkt-zu-Punkt-Verbindung (beispielsweise einer Basisstation in Aufwärtsrichtung) mit überlagerten Signalen mehrerer Sender.

Für die Punkt-zu-Multipunkt-Verbindung ist eine Codierung der Teilnehmersignale erforderlich, es bietet sich die Verwendung eines gemeinsamen Subgrundimpulses für alle Teilnehmersignale an. Die einzelnen Grundimpulse bestehen dabei aus unterschiedlichen Kombinationen der Subgrundimpulse. Bei der Auswertung von Meßsequenzen ist die Abfolge der Subgrundimpulse im Empfänger a-priori bekannt. Alle Teilnehmer können nun die Systemgrundimpulsantworten der übrigen Teilnehmer bestimmen und eine Mehrteilnehmerdetektion wird eingeleitet. Dabei sind zwei Vorgehensweisen möglich: die Detektion erfolgt auf der Basis der unterschiedlichen Systemgrundimpulsantworten oder auf der Basis des gemeinsamen Subgrundimpulses und der dazugehörigen Systemgrundimpulsantwort.

Im zweiten Fall, siehe FIG 8 für einen Zweig, erfolgt zuerst die Befreiung des Subgrundimpulses von der Intersymbolinterferenz durch ein diskontinuierliches Transversalfilter. Als Ergebnis erhält man die Folge der komplexen Modulationsfaktoren mit denen der Subgrundimpuls auf der Sendeseite beaufschlagt worden ist. Dieser Verarbeitung karm eine rauschoptimale Filterung vorangehen.

Auf die Eliminierung der Intersymbolinterferenz folgt die Trennung der Teilnehmersignale. Diese Teilnehmersignale bestehen aus unterschiedlichen Folgen von Subgrundimpulsen. In der Verarbeitung erfolgt zunächst eine Blockbildung entsprechend der Anzahl von Subgrundimpulsen der Teilnehmer. Für jeden Block erfolgt dann die Trennung der Teilnehmersignale. Zur Aufwandreduzierung der Trennung bieten sich Walsh-Folgen an, die aufgrund der Verwandtschaft zur diskreten Fouriertransformation aufwandgünstige Realisierungen zulassen. Vorteilhaft sind Walsh-Folgen der Länge 2, 4, 8, 16, 32 u.s.w.

Als Erweiterung dieses Verfahren kann gemäß FIG 9 eine Eliminierung der Gleichkanalstörung vorangehen. Hierzu werden beispielsweise die Meßsequenzen der störenden Gleichkanalsignale detektiert und die zugehörige Systemgrundimpulsantwort bestimmt. Um diese störende Systemgrundimpulsantwort von den Systemgrundimpulsantworten der gewünschten Subgrundimpulse zu trennen wird das zuvor geschilderte Verfahren eingesetzt.

Die vorgestellten Transversalfilter lassen sich folgendermaßen klassifizieren:

- diskontinuierliche Transversalfilter zur Befreiung von Intersymbolinterferenzen,
- diskontinuierliche Transversalfilter zur Eliminierung von Gleichkanalstörern,
- kontinuierliche Transversalfilter zur Rauschoptimierung,
- Satz von diskontinuierlichen Transversalfiltern zur Trennung von Teilnehmersignalen.

Diese Konfigurationen von Transversalfiltern können nacheinander angeordnet sein (nacheinander und damit getrennt ausgeführt werden) oder in einem einzigen Filter verwirklicht werden. Hierzu sind allerdings die einzelnen Koeffizienten miteinander zu falten und ein diskontinuierlicher Betrieb vorzusehen.

Die diskontinuierliche Transversalfilterung kann in Mobilfunksystemen mit FDMA/TDMA-Teilnehmerseparierung aufgrund der Leistungsfähigkeit und des geringen Implementierungsaufwandes eingesetzt werden. Besondere Vorteile ergeben sich bei großen Ausdehnungen der Intersymbolinterferenz und bei hochratiger Datenübertragung.

Im Gegensatz zu DS-CDMA Übertragungsverfahren, bei dem möglichst lange Pseudozufallsfolgen zur Spreizung eingesetzt werden, verwendet das erfindungsgemäße Verfahren möglichst kurze und deterministische Folgen von Subgrundimpulsen. Die gegenseitige Störung der Teilnehmersignale kann exakt berücksichtigt und eliminiert werden.

Von einem aus DE 41 21 356 A1 bekannten JD-CDMA-Detektionsverfahren unterscheidet sich die Erfindung insbesondere durch den Einsatz eines Transversalfilters und durch die allgemeine Nutzbarkeit verschiedenster Grundimpulse. Der Aufwand der erfindungsgemäßen Realisierung ist geringer, da lediglich kleine Matrizen zu invertieren und ansonsten im wesentlichen nur Transversalfilteroperationen auszuführen sind.

Die Einsatzmöglichkeiten des erfindungsgemäßen Verfahrens zur Datenübertragung sind nicht nur auf Mobilfunksysteme ab der 3. Generation beschränkt, es ist auch ein Einsatz in DECT-Schnurlostelefonsystemen, in drahtlosen Teilnehmeranschlußsystemen und für eine Implementierung in bestehende GSM-Netze möglich.

**Patentansprüche**

1.  Verfahren zur Datenübertragung in einem Kommunikationssystem, bei dem empfangsseitig

    -   zumindest ein über einen Übertragungskanal übertragenes Teilnehmersignal empfangen wird, das aus mit einem Modulationsfaktor (Mi) modifizierten Grundimpulsen besteht, wobei die Grundimpulse mit einem Grundimpulsfolgetakt getaktet werden,
    -   aus dem Teilnehmersignal Abtastwerte mit einer Abtastrate bestimmt werden, wobei die Abtastrate als ein ganzes Vielfaches des Grundimpulsfolgetaktes gewählt wird,
    -   aus dem Teilnehmersignal teilnehmersignalindividuelle Systemimpulsantworten (SAi) bestimmt werden,
    -   aus den Systemimpulsantworten (SAi) teilnehmersignalindividuelle Filterkoeffizienten bestimmt werden, und
    -   eine Transversalfilterung der Abtastwerte in einem diskontinuierlichen Transversalfilter zur Ermittlung des Modulationsfaktors (Mi) erfolgt, wobei die Abtastwerte in dem diskontinuierlichen Transversalfilter um jeweils einen Grundimpulsfolgetakt versetzt werden.

2.  Verfahren nach Anspruch 1, bei dem die Taktung des diskontinuierlichen Transversalfilters derart erfolgt, daß die Abtastwerte um einen Grundimpulsfolgetakt versetzt werden.

3.  Verfahren nach Anspruch 1, bei dem das Vielfache mindestens gleich der Anzahl zu unterscheidender Teilnehmersignale gewählt wird .

4.  Verfahren nach einem der vorherigen Ansprüche, bei dem einer Verbindung mehrere Systemgrundimpulse zugeordnet sind, die parallel verwendet werden.

5.  Verfahren nach einem der vorherigen Ansprüche, bei dem unterschiedliche Grundimpulse für ein Teilnehmersignal verwendet werden, wobei empfangsseitig die Aussage über die bestimmten Grundimpulse zur Detektion der Teilnehmersignale verwendet werden.

6.  Verfahren nach einem der vorherigen Ansprüche, bei dem der gleiche Grundimpuls für zwei ausreichend unterschiedliche Übertragungskanäle verwendet wird.

7.  Verfahren nach einem der vorherigen Ansprüche, bei dem in den Teilnehmersignalen enthaltene Meßsequenzen zur Bestimmung der Filterkoeffizienten ausgewertet werden, wobei Charakteristika der Meßsequenzen in der Empfangseinrichtung gespeichert sind.

8.  Verfahren nach Anspruch. 7, bei dem mehrere teilnehmersignalindividuelle Filterkoeffizienten bestimmt werden und eine entsprechende Anzahl von Transversalfilteroperationen durchgeführt wird.

9.  Verfahren nach Anspruch 7 oder 8, bei dem die Bestimmung der Systemimpulsantworten (SAi) in Abständen aktualisiert wird, die größer sind als Taktrate des diskontinuierlichen Transversalfilters.

10. Verfahren nach einem der vorherigen Ansprüche, bei dem die Dauer eines Grundimpulses größer als eine Periode des Grundimpulsfolgetaktes ist.

11. Verfahren nach einem der vorherigen Ansprüche, bei dem zur rauschoptimalen Transversalfilterung eine Korrelation der Abtastwerte mit einer konjugiert komplexen Größe der Systemgrundimpulsantwort durchgeführt wird.

12. Kommunikationssystem mit einer Empfangseinrichtung, die zumindest

    -   eine Einrichtung zur Signalvorverarbeitung zumindest eines über einen Übertragungskanal übertragenen Teilnehmersignals, das aus mit einem Modulationsfaktor (Mi) modifizierten Grundimpulsen besteht, wobei die Grundimpulse mit einem Grundimpulsfolgetakt getaktet sind,
    -   eine Einrichtung zur Bestimmung von Abtastwerten mit einer Abtastrate, wobei die Abtastrate als ein mindestens der Anzahl zu unterscheidender Teilnehmersignale entsprechendes ganzes Vielfaches eines Grundimpulsfolgetaktes gewählt ist,

- mit einer Einrichtung zur Bestimmung von teilnehmersignalindividuellen Systemgrundimpulsantworten aus dem Teilnehmersignal,
- eine Einrichtung zur Bestimmung von teilnehmersignalindividuellen Filterkoeffizienten aus den Systemgrundimpulsantworten, und
- einen diskontinuierlichen Transversalfilter zur Ermittlung des Modulationsfaktors (Mi) unter Verwendung der Filterkoeffizienten, wobei die Abtastwerte in dem diskontinuierlichen Transversalfilter um jeweils einen Grundimpulsfolgetakt versetzt werden,

aufweist.

**Claims**

1. Method for transmitting data in a communication system, in which, at the receiving end,

    - there is received at least one subscriber signal which is transmitted via a transmission channel and comprises basic pulses modified by a modulation factor (Mi), the basic pulses being clocked with a basic pulse train clock rate,
    - samples are determined from the subscriber signal at a sampling rate, the sampling rate being selected as an integral multiple of the basic pulse train clock rate,
    - subscriber signal-specific system pulse responses (SAi) are determined from the subscriber signal,
    - subscriber-specific filter coefficients are determined from the system pulse responses (SAi) and
    - transverse filtering of the samples is performed in a discontinuous transverse filter in order to determine the modulation factor (Mi), the samples being offset in the discontinuous transverse filter by one basic pulse train clock rate in each case.

2. Method according to Claim 1, in which the clocking of a discontinuous transverse filter is performed in such a way that the samples are offset by one basic pulse train clock rate.

3. Method according to Claim 1, in which the multiple is selected at least to be equal to the number of subscriber signals to be distinguished.

4. Method according to one of the preceding claims, in which a plurality of system basic pulses which are used in parallel are assigned to a connection.

5. Method according to one of the preceding claims, in which different basic pulses are used for a subscriber signal, the statement on the basic pulses determined being used at the receiving end to detect the subscriber signals.

6. Method according to one of the preceding claims, in which the same basic pulse is used for two sufficiently different transmission channels.

7. Method according to one of the preceding claims, in which measuring sequences contained in the subscriber signals are evaluated to determine the filter coefficients, characteristics of the measured sequences being stored in the receiver.

8. Method according to Claim 7, in which a plurality of subscriber signal-specific filter coefficients are determined, and a corresponding number of transverse filter operations are carried out.

9. Method according to Claim 7 or 8, in which the determination of the system pulse responses (SAi) is updated at intervals which are greater than the clock rate of the discontinuous transverse filter.

10. Method according to one of the preceding claims, in which the duration of a basic pulse is greater than a period of the basic pulse train clock rate.

11. Method according to one of the preceding claims, in which a correlation of the samples with a conjugate complex variable of the system basic pulse response is carried out for the purpose of noise-optimum transverse filtering.

**12.** Communication system with a receiver which has at least

- a device for preprocessing at least one subscriber signal which is transmitted via a transmission channel and comprises basic pulses modified by a moderation factor (Mi), the basic pulses being clocked at the basic pulse train clock rate,
- a device for determining samples at a sampling rate, the sampling rate being selected as an integral multiple, corresponding at least to the number of subscriber signals to be distinguished, of a basic pulse train clock rate,
- a device for determining subscriber signal-specific system basic pulse responses from the subscriber signal
- a device for determining subscriber signal-specific filter coefficients from the system basic pulse responses and
- a discontinuous transverse filter for determining the modulation factor (Mi) by using the filter coefficients, the samples being offset in the discontinuous transverse filter by one basic pulse train clock rate in each case.

**Revendications**

**1.** Procédé de transmission de données dans un système de communication, dans lequel, du côté réception :

- au moins un signal d'abonné transmis par un canal de transmission est reçu et est constitué d'impulsions de base modifiées par un vecteur de modulation (Mi), les impulsions de base étant cadencées à une cadence de succession des impulsions de base,
- à partir du signal d'abonné, on détermine des valeurs d'échantillonnage à un taux d'échantillonnage, le taux d'échantillonnage sélectionné représentant un multiple entier de la cadence de succession des impulsions de base;
- à partir du signal d'abonné, on détermine des réponses impulsionnelles du système (SAi) individuelles au signal d'abonné,
- à partir des réponses impulsionnelles du système (SAi), on détermine des coefficients de filtrage spécifiques au signal d'abonné, et
- on effectue un filtrage transversal des valeurs d'échantillonnage dans un filtre transversal discontinu pour déterminer le facteur de modulation (Mi), les valeurs d'échantillonnage étant décalées chaque fois d'une cadence de succession d'impulsions de base dans le filtre transversal discontinu.

**2.** Procédé selon la revendication 1, dans lequel le cadençage du filtre transversal discontinu s'effectue de telle sorte que les valeurs d'échantillonnage soient décalées d'une cadence de succession d'impulsions de base.

**3.** Procédé selon la revendication 1, dans lequel le multiple sélectionné est au moins égal au nombre des signaux d'abonnés à distinguer.

**4.** Procédé selon l'une des revendications précédentes, dans lequel plusieurs impulsions de base du système utilisé en parallèle sont associées à une liaison.

**5.** Procédé selon l'une des revendications précédentes, dans lequel différentes impulsions de base sont utilisées pour un signal d'abonné, et du côté réception, les conclusions concernant les impulsions de base définies sont utilisées pour la détection des signaux d'abonnés.

**6.** Procédé selon l'une des revendications précédentes, dans lequel on utilise la même impulsion de base pour deux canaux de transmission suffisamment différents.

**7.** Procédé selon l'une des revendications précédentes, dans lequel des séquences de mesure contenues dans les signaux d'abonnés sont utilisées pour la détermination des coefficients de filtre, des caractéristiques des séquences de mesure étant conservées en mémoire dans le dispositif de réception.

**8.** Procédé selon la revendication 7, dans lequel plusieurs coefficients de filtre spécifiques aux signaux d'abonnés sont déterminés, et on exécute un nombre correspondant d'opération de filtrage transversal.

**9.** Procédé selon la revendication 7 ou 8, dans lequel la détermination des réponses impulsionnelles du système (SAi) est actualisée à des intervalles plus longs que le taux de cadençage du filtre transversal discontinu.

**10.** Procédé selon l'une des revendications précédentes, dans lequel la durée d'une impulsion de base est plus longue qu'une période de la cadence de succession des impulsions de base.

**11.** Procédé selon l'une des revendications précédentes, dans lequel, pour obtenir un filtrage transversal à optimisation du bruit, on réalise une corrélation des valeurs d'échantillonnage avec un conjugué complexe d'une grandeur de la réponse impulsionnelle de base du système.

**12.** Système de communication avec un dispositif de réception, comprenant au moins :

- un dispositif de prétraitement du signal pour au moins un signal d'abonné transmis par un canal de transmission et constitué d'impulsions de base modifiées par un facteur de modulation (Mi), les impulsions de base étant cadencées à une cadence de succession des impulsions de base,
- un dispositif pour la détermination de valeurs d'échantillonnage à un taux d'échantillonnage, le taux d'échantillonnage étant sélectionné en tant qu'un multiple entier d'une cadence de successions des impulsions de base qui correspond au moins au nombre des signaux d'abonnés à distinguer,
- un dispositif pour la détermination de réponses impulsionnelles de base du système spécifiques aux signaux d'abonnés à partir du signal d'abonné,
- un dispositif pour la détermination de coefficients de filtre spécifiques aux signaux d'abonnés à partir des réponses impulsionnelles de base du système, et
- un filtre transversal discontinu pour la détermination du facteur de modulation (Mi) en recourant au coefficient de filtre, les valeurs d'échantillonnage étant chaque fois décalées d'une cadence de succession d'impulsions de base dans le filtre transversal discontinu.

Fig.1

# Fig.2

# Fig.3

# Fig.4

EP 1 025 655 B1

# Fig.5

Eingangsdaten →

Schiebetakt →

Schieberegister

Filterkoeffizienten

Summation

Ergebnis →

# Fig.6

Eliminierung der Gleichkanal- störung →

rauschoptimale Transversal- filterung →

diskontinuierliche Transveralfilerung

16

EP 1 025 655 B1

## Fig.7

| Eliminierung des Teilnehmer-signals A | → | rauschoptimale Transversal-filterung | → | diskontinuierliche Transveralfilerung |

| Eliminierung des Teilnehmer-signals B | → | rauschoptimale Transversal-filterung | → | diskontinuierliche Transveralfilerung |

## Fig.8

| rauschoptimale Transversal-filterung | → | diskontinuierliche Transveralfilerung | → | Trennung der Teilnehmer-signale |

## Fig.9

| Eliminierung der Gleichkanal-störung |
↓
| rauschoptimale Transversal-filterung | → | diskontinuierliche Transveralfilerung | → | Trennung der Teilnehmer-signale |